# EUROPÄISCHE PATENTSCHRIFT

(11) **EP 1 176 836 B1**
(45) Veröffentlichungstag und Bekanntmachung des Hinweises auf die Patenterteilung: **10.12.2003**
(21) Anmeldenummer: 00810645.2
(22) Anmeldetag: 19.07.2000
(51) Int. Cl.: H04Q 3/00

(54) **Fernabstimmung in einem intelligenten netzwerk**
Televoting in an intelligent network
Vote à distance dans un réseau intelligent

(43) Veröffentlichungstag der Anmeldung: 30.01.2002
(73) Patentinhaber: Swisscom Mobile AG, 3050 Bern (CH)
(72) Erfinder: Weber, Adrian, 6362 Stansstad (CH)
(74) Vertreter: Saam, Christophe

(56) Entgegenhaltungen:
- WO-A-96/32818
- WO-A-99/51009
- WO-A-99/52262
- WO-A-99/52300

## Beschreibung

Die vorliegende Erfindung betrifft ein Verfahren und ein System für die Abgabe von Teilnehmerstimmen durch Anwahl einer der jeweiligen Stimme entsprechenden Telefonnummer in einem öffentlichen intelligenten Telekommunikationsnetz. Die vorliegende Erfindung betrifft insbesondere ein Televoting-System.

Es sind schon Abstimmungssysteme und Verfahren bekannt, mit welchen Abstimmungsinitiatoren (hiernach Hauptpartner genannt) Marktstudien, Statistiken, Publikumsumfragen, Telemarketing-Aktionen und Abstimmungen durchführen können. Zu diesem Zweck machen sie beispielsweise am Fernsehen, am Radio, im Internet, usw. Werbung für die Abstimmungsaktion und für eine Liste von Telefonnummern, die während einem bestimmten Zeitfenster von Teilnehmern gewählt werden können, um ihre Stimme einzugeben. Die Dauer der Abstimmungsaktion kann zwischen einigen Minuten, beispielsweise für eine Fernsehsendung, bis zu einigen Tagen, beispielsweise für eine nationale Spendeaktion, variieren. Anrufer können durch Anwahl verschiedener veröffentlichter Telefonnummern verschiedene Meinungen äussern - beispielsweise "JA" mit einer ersten Nummer und "Nein" mit einer zweiten Nummer wählen. Es kann eine beliebige Anzahl von Telefonnummern für verschiedenen Abstimmungsmöglichkeiten vorgesehen werden.

Eine Zentrale im Telekommunikationsnetz zählt die jeweiligen ausgewählten Nummern und leitet das Ergebnis, entweder in Echtzeit oder erst am Ende der Abstimmungsaktion, dem Hauptpartner weiter. Solche Systeme werden unter anderem verwendet, um die Reaktion von Zuschauern während Fernsehspielen oder Wettbewerben zu erhalten, oder für Spendeaktionen, usw.

Die Anzahl von Anrufen während einer sehr kurzen Zeitspanne kann für manche Ereignisse extrem hoch sein (Explosiv Verkehr). Um eine unzulässige Stossbelastung des Netzes zu verhindern, wurde im Patent EP0339469 (Siemens) vorgeschlagen, die Stimmen in einem intelligenten Netz nicht in einer Zentrale zu zählen, sondern dezentral in jeder Vermittlungsstelle (SSP). Die Summe der als Voten erkannten Verbindungsversuche wird in jeder Vermittlungsstelle (SSP) gezählt und das Ergebnis wird über einen geeigneten Kanal an die Zentrale kommuniziert. Dadurch kann die Belastung des Netzes enorm reduziert werden.

Eine ähnliche Lösung wurde auch in der Anmeldung WO96/32818 (Nokia Telecommunications OY) vorgeschlagen. In dieser Lösung wird zusätzlich eine der angewählten Nummer entsprechende Textmeldung als Bestätigung gesprochen.

Parameter, die die Konditionen der Abstimmungsaktion definieren, können gemäss der Anmeldung AU199894061 (Ericsson Australia Pty Ltd.) auch vom Hauptpartner (beispielsweise über Internet) eingegeben werden. Auf diese Weise kann der Hauptpartner unter anderem den Anfang und das Ende des Zeitfensters, während welchem abgestimmt werden kann, selbst eingeben.

Es ist oft erwünscht, dass eine bestimmte Anzahl oder Prozente der ankommenden Anrufe nicht nur gezählt werden, sondern auch weitergeleitet werden, beispielsweise an den Hauptpartner oder an einen Call Center. Bei Fernsehspielen oder Spendeaktionen beispielsweise kann die Teilnahme drastisch erhöht werden, wenn eine kleine Anzahl selektierter Anrufer die Möglichkeit erhalten, live mit dem Moderator oder mit Gästen im Studio zu sprechen.

Es wäre auch wünschenswert, einige zufällig ausgewählte Anrufer mit einer Belohnung für den Anruf zu beschenken.

Es ist ein Ziel der Erfindung, ein neues System und ein neues Verfahren anzubieten, welche diese Möglichkeiten anbieten können.

Ein anderes Ziel ist es, ein neues System und ein neues Verfahren anzubieten, welche besser als die bekannten Verfahren und Systeme sind.

Ein anderes Ziel ist es, ein neues System und ein neues Verfahren anzubieten, mit welchen sich neue, flexiblere Möglichkeiten für die Weiterleitung von Anrufen während einer Abstimmungsaktion eröffnen.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren erreicht, in welchem Anrufe an verschiedene Zielnummern gemäss vordefinierten Kriterien weitergeleitet werden.

Dies hat den Vorteil, dass selektierte Anrufe an verschiedene Zielnummern weitergeleitet werden können, beispielsweise in ein TV-Studio, an den Call Center eines Partners, an einen IVR, usw. Auf diese Weise können ausgewählte Anrufer beispielsweise auf verschiedene Art belohnt oder adressiert werden. Eine kleine Anzahl von Anrufern werden beispielsweise direkt mit einem Fernsehstudio verbunden, während andere Anrufer mit Gästen in einem Call Center diskutieren können und alle anderen Anrufe von einem automatischen Sprachserver behandelt werden.

Damit weitergeleitete Anrufer nicht auflegen, wird vorzugsweise ein Sprechtext gesprochen, beispielsweise "Sie haben jetzt eine Chance, dass Ihr Anruf ins Studio weitergeleitet wird, bitte bleiben Sie am Apparat".

Im Folgenden werden anhand der beigefügten Zeichnung bevorzugte Ausführungsbeispiele der Erfindung näher beschrieben. Es zeigen:

Die Figur 1 ein schematisches Diagramm eines Systems, in welchem selektierte Anrufe von Teilnehmern an einer Abstimmungsaktion an verschiedene Zielnummern weitergeleitet werden.

Die Figur 2 ein schematisches Diagramm einer ersten Variante der Erfindung, in welcher vordefinierte Anteile von weiterzuleitenden Anrufen an jede benannte Zielnummer weitergeleitet werden.

Die Figur 3 ein schematisches Diagramm einer zweiten Variante der Erfindung, in welcher weiterzuleitende Anrufe vorerst an eine erste benannte Zielnummer weitergeleitet werden und erst dann an eine nächste Zielnummer, wenn die Anzahl Anrufe die an die benannte erste Zielnummer weitergeleitet worden sind höher als ein vorbestimmter Schwellwert ist.

Die Figur 4 das Format der Telefonnummer in einer ersten Variante der Erfindung.

Die Figur 5 das Format der Telefonnummer in einer zweiten Variante der Erfindung.

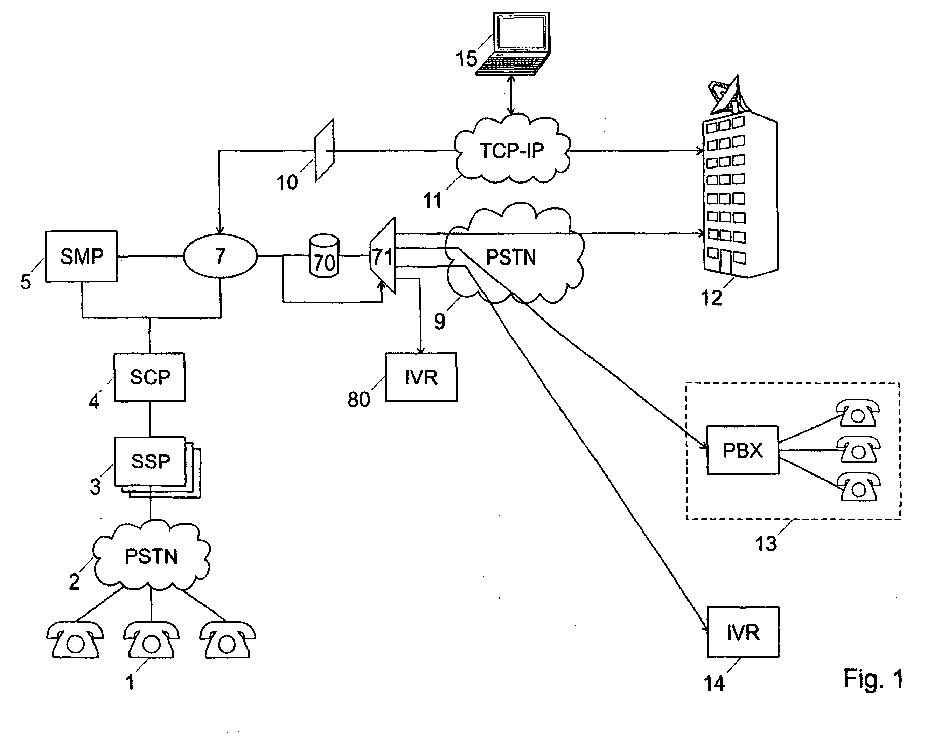

Die Figur 1 illustriert die Abläufe in einem System gemäss einer bevorzugten Ausführungsvariante der Erfindung. In diesem Beispiel umfasst das System ein Telekommunikationsnetz 2, beispielsweise das öffentliche geschaltete Telefonnetz, ein Mobilfunknetz oder ein ISDN-Netz (Integrated Services Digital Network), in welchem eine Vielzahl von Teilnehmern (hiernach "Anrufer" benannt) mit Endgeräten Sprachverbindungen herstellen können.

Das Telekommunikationsnetz 2 ist vorzugsweise ein intelligentes Netz (IN) und umfasst somit eine übergeordnete Intelligenz 4, beispielsweise einen SCP (Signal Control Point). Der SCP umfasst eine Datenbank, die angibt, wie ankommende Verbindungen weitergeleitet werden sollen. Eine Vielzahl von digitalen Vermittlungsstellen 3, beispielsweise SSP (Signal Switching Points), vermitteln die Verbindungen auf Basis der Angaben im SCP. Zu diesem Zweck sendet jede Vermittlungsstelle, die eine Verbindung empfangen hat, welche eine intelligente Behandlung verlangt, eine Abfrage über ein Signalisierungsprotokoll (beispielsweise S57 oder TCP-IP) an den SCP 4. Der SCP interpretiert die Abfrage anhand seiner Datenbank und der vom SSP angegebenen Kriterien, um zu bestimmen, wie die Verbindung vermittelt werden muss und sendet eine entsprechende Antwort an den SSP. Das Netz umfasst einen Service Management Point (SMP) 4, der über eine geeignete Schnittstelle mit dem SCP verbunden ist, und der als Gateway zwischen dem SCP und anderen Modulen (u.a. Modul 7) und Steuerungspunkten für die Administration des SCPs dient. Das System 3, 4, 5 mit einem SMP, einem oder mehreren SCP und einer Vielzahl von SSP kann beispielsweise aus der Siemens IN Plattform NWS-PD3 bestehen; andere bekannte IN-Lösungen vom selben oder von anderen Herstellern können aber im Rahmen der Erfindung auch eingesetzt werden.

Erfindungsgemäss umfasst das System ein Modul 7 für die Behandlung der Stimmen während Abstimmungsaktionen und für die Auswertung der Ergebnisse. Das Modul 7 kann aus Hardware- und/oder Software-Komponenten bestehen, beispielsweise aus einem speziell programmierten Server, der über eine geeignete Schnittstelle mit dem SMP 5 und/oder direkt mit dem SCP 4 verbunden ist, oder aus einem Software-Modul im SMP 5. Es ist auch möglich, die Funktionalität des Moduls 7 durch verschiedene Softwareanwendungen in einem oder mehreren Servern zur Verfügung zu stellen.

Ein Hauptpartner 12, der eine Abstimmungsaktion veranstalten will, muss Parameter die die Konditionen der Abstimmung definieren im Voraus eingeben, beispielsweise über das Internet 11 und eine Firewall 10. Der Hauptpartner kann beispielsweise ein Fernseh- oder Radio-Studio sein, welches Zuschauer für ein Fernsehspiel oder eine Publikumsumfrage während eines bestimmten Zeitfensters über ein bestimmtes Thema abstimmen lässt. Es können jedoch Abstimmungsaktionen von anderen Hauptpartnern veranstaltet werden, die über genügend Werbemittel verfügen, um den Voten entsprechende Telefonnummern bei einer grossen Anzahl von Anrufern bekannt zu machen.

Die vom Hauptpartner eingegebenen Parameter umfassen beispielsweise unter anderem den Anfang und das Ende des Zeitfensters während welchem Anrufer abstimmen können, die Zielnummer, die gewünschte Anrufnummer an welche selektierte Anrufe weitergeleitet werden, den Sprechtext der als Bestätigung an den Anrufer gesprochen wird, Listen von autorisierten Anrufern, usw. Diese Parameter werden im Modul 7 abgelegt; manche Parameter können in den SCP 4 und gegebenenfalls in die SSP 3 kopiert werden, die somit derart programmiert werden, dass während des angegebenen Zeitfensters ankommende Verbindungsversuche, welche Voten von Anrufern 1 entsprechen, als solche erkannt und behandelt werden.

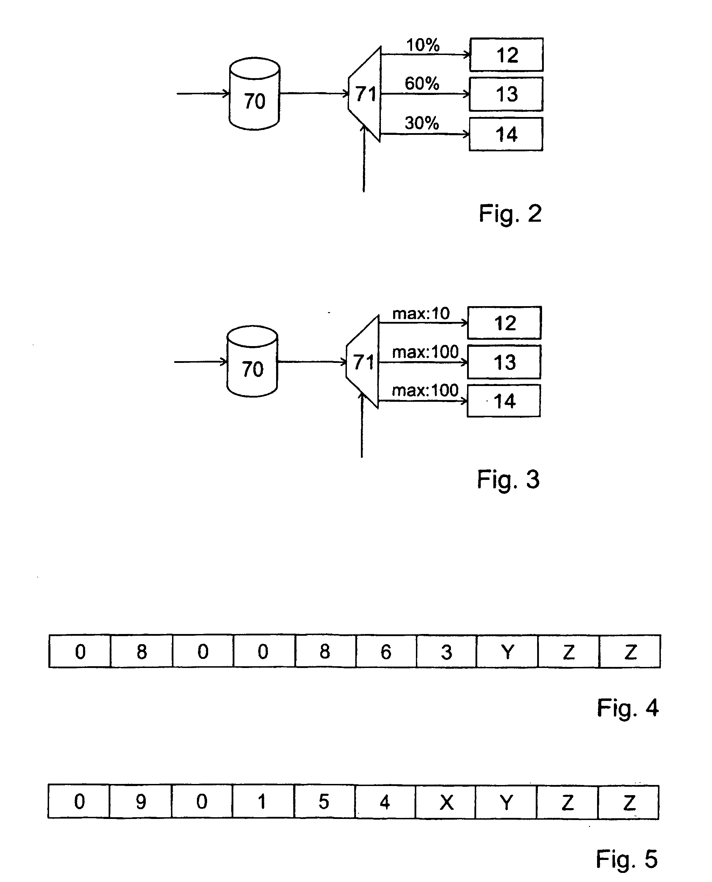

Die Figur 4 zeigt als Beispiel das Format der Telefonnummer für Abstimmungsaktionen in einer ersten Variante der Erfindung. In dieser Variante wird der Zugang zur Abstimmungsplattform über die Nummernblöcke 0800863yzz ermöglicht, in welchen y eine Identifizierungsnummer des Hauptpartners 12 ist während zz 99 Abstimmungsmöglichkeiten ("Voten") entspricht. In dieser Variante wird der Anruf nicht verrechnet.

Die Figur 5 zeigt als Beispiel das Format der Telefonnummer für Abstimmungsaktionen in einer zweiten Variante der Erfindung. In dieser Variante wird der Zugang zur Abstimmungsplattform über die Nummernblöcke 090154xyzz ermöglicht, in welchen x ein Tarifcode ist, y eine Identifizierungsnummer des Hauptpartners 12 ist, während zz 99 Abstimmungsmöglichkeiten ("Voting Codes") entspricht. In dieser Variante wird der Anruf dem Anrufer verrechnet, wobei der Preis vom Wert x abhängig ist und wobei mindestens ein Teil des verrechneten Betrags dem Hauptpartner 12 gutgeschrieben wird.

Es ist auch möglich, einen unterschiedlichen Betrag für unterschiedliche Voting Codes in derselben Abstimmungsaktion zu verrechnen; auf diese Weise können neue Möglichkeiten eingesetzt werden, um beispielsweise Geld bei Spendeaktionen oder Auktionen zu sammeln.

In einer Variante der Erfindung können Geldbeträge auch offline verrechnet werden. In diesem Fall werden Anrufe separat (beispielsweise mit einer vom Hauptpartner erstellten Rechnung) dem Anrufer verrechnet, wobei der verrechnete Betrag von der angewählten Nummer und/oder von den während der Verbindung eingegebenen DTMF-Codes abhängig sein kann. Diese Möglichkeit erlaubt es unter anderem, innovative Telemarketing-Aktionen durchzuführen, beispielsweise indem Produkte oder Dienstleistungen durch einen automatisch bearbeiten Anruf bestellt werden können und offline bezahlt werden.

In beiden Varianten hat der Hauptpartner die Möglichkeit, eine beliebige Anzahl von vorzugsweise aufeinanderfolgenden Nummern für Voting Codes zu abonnieren, wobei der vom Netzbetreiber verrechnete Betrag auch von der Anzahl der vergebenen Nummern abhängig sein kann.

Die reservierten Telefonnummern können nur für eine Abstimmungsaktion gleichzeitig verwendet werden. Um mehrere Abstimmungsaktionen gleichzeitig durchzuführen, muss ein Hauptpartner mehrere Nummern reservieren. Dieselbe Nummer kann jedoch für eine nächste, zeitlich verschobene Aktion wiederum eingesetzt werden.

Anrufe werden in einer ersten Variante in den SSP 3 gezählt. Jeder SSP erkennt anhand der angewählten Nummer, dass der Anrufer an einer vorprogrammierten Abstimmungsaktion teilnimmt und zählt entsprechend die erhaltenen Stimmen. Die gezählte Summe wird beispielsweise periodisch oder nach Erreichen von bestimmten Schwellwerten über den Signalisierungskanal durch den SCP 4 an das Modul 7 weitergeleitet.

Der vom Hauptpartner im Voraus definierte Sprechtext wird als Bestätigung im SSP hinterlegt und die Verbindung wird abgebrochen. Es ist auch möglich, einen individuellen Sprechtext für jedes möglich Votum anzulegen. In einer bevorzugten Variante der Erfindung hat der Hauptpartner die Möglichkeit, den Sprechtext auch während einer Abstimmungsaktion zu ändern. Es können auch unterschiedliche Sprechtexte in jedem SSP angelegt werden, um beispielsweise Sprachgrenzen zu berücksichtigen.

Sind die Anrufe kostenpflichtig, sendet jeder SSP periodisch oder nach Erreichen von bestimmten Schwellwerten Taxierungsdaten zum SCP 4 und zum SMP 5. Die Verrechnung und die eventuelle Begünstigung des Hauptpartners 12 erfolgt dann durch bekannte Mechanismen wie für andere, normale Geschäftsnummern mit Vorwahl 0800 beziehungsweise 0900.

Wie später beschrieben wird ein Teil der Verbindungsversuche (beispielsweise jeder hunderte Anruf oder ein Anruf pro Sekunde) vorerst im SSP 3 gezählt und dann durch den SCP 4 an das Modul 7 weitergeleitet.

Es ist auch möglich, alle Anrufe aller SSP durch den SCP 4 an das Modul 7 weiterzuleiten und von diesem zählen zu lassen. Diese Variante erlaubt es nicht, grosse Abstimmungsaktionen ohne Netzkollidierungsrisiken durchzuführen; sie hat jedoch den Vorteil, dass wiederholte Anrufe eines selben Anrufers oder Anrufe aus nicht autorisierten Nummern erkannt werden können und eignet sich demzufolge insbesondere für regionale Events oder für Abstimmungsaktionen, die während eines langen Zeitfensters (beispielsweise mehrere Tage) durchgeführt werden.

Der Hauptpartner kann ausserdem mit dieser Variante Teilnahrnekriterien definieren und somit angeben, wer an der Abstimmungsaktion teilnehmen darf. Beispielsweise kann er Listen von autorisierten oder gesperrten Telefonnummern oder Telefonnummerblöcken definieren.

Vorzugsweise kann der Hauptpartner 12 selbst über das Internet 11 bestimmen, ob die Anrufe in den SSP 3 oder erst im SCP 4 gezählt werden müssen. Erfindungsgemäss hat er sogar die Möglichkeit, diese Option während einer Abstimmungsaktion zu ändern. Vorzugsweise kann auch der Betreiber des Netzes 2 dies ändern, beispielsweise das Vorzählen in den SSP erst einzuschalten, wenn die Belastung des Netzes oder bestimmter Teile vom Netz 2 einen bestimmten Schwellenwert erreicht.

Das Ergebnis der Abstimmung (unter anderem die Anzahl Stimmen für jede Wahloption) wird im Modul 7 gespeichert und über das Internet 11 oder einen anderen Übertragungskanal dem Hauptpartner 12 bekannt gemacht. Dieses Ergebnis wird vorzugsweise in einer http- oder WAP-Plattform vorbereitet und je nach Herkunft der Anrufer statistisch ausgewertet. Vorzugsweise kann der Hauptpartner definieren, wie die Auswertung geographisch unterteilt werden muss (beispielsweise nach Sprachregion, nach Land, nach Kanton, nach Vorwahl-Gebieten, nach Stadt, usw.). Der Hauptpartner 12 und eventuell auch andere Internet-Benutzer 15, können sich vorzugsweise in Echtzeit mit dem Modul 7 verbinden, um auch während des autorisierten Zeitfensters auf die Abstimmungsergebnisse zugreifen zu können. In einer anderen Variante bleiben die Ergebnisse bis zum Ende der Abstimmungsaktion vertraulich und werden erst danach über Internet und eventuell durch den Hauptpartner (beispielsweise ein Fernsehstudio) bekannt gemacht.

Vorzugsweise hat der Hauptpartner die Möglichkeit, auch kurz vor oder sogar während des Abstimmungszeitfensters die Abstimmungsparameter über Internet 11 anzupassen. Auf diese Weise kann der Hauptpartner ohne Intervention des Netzbetreibers beispielsweise das Zeitfenster selbst verschieben, neue Abstimmungsoptionen zulassen, usw.

Wie schon erwähnt wird ein kleiner Anteil der Verbindungsversuche nicht in den SSP 3 gesendet, sondern durch den SCP 4 zum Modul 7 weitergeleitet. Die Anzahl Anrufe die weitergeleitet werden, wird im voraus bestimmt und ist vorzugsweise abhängig von der Anzahl Teilnehmer, die mit dem SSP 3 verbunden sind, damit die Chancen selektiert zu werden unabhängig vom Anrufstandort und vom SSP sind. Die SSP können beispielsweise so programmiert werden, dass jeder m-te Anruf weitergeleitet wird, oder dass ein Anruf jede n-te Sekunde weitergeleitet wird, wobei n und eventuell m vom SSP abhängig sein können.

In einer bevorzugten Variante werden diese Anrufe nicht gleich weitergeleitet. Die SSP 3 werden in diesem Fall so programmiert, dass sie bei jedem m-ten Anruf, beziehungsweise jede n-te Sekunde, den SCP 4 anfragen, ob der bestehende Verbindungsversuch weitergeleitet werden soll. Der SCP kann dann entscheiden, wann Anrufe aus jedem SSP weitergeleitet werden sollen, um eine optimale Repräsentativität der Anrufer pro Region zu gewährleisten, oder im Gegenteil um eine Stadt oder Region zu begünstigen. Die Anzahl der weitergeleiteten Anrufe aus jedem SSP kann vorzugsweise auch mehrmals innerhalb des Zeitfensters für eine Abstimmungsaktion unter Kontrolle des Moduls 7 angepasst werden. Auf diese Weise kann beispielsweise ein Fernsehstudio entscheiden, temporär nur noch Anrufe einer bestimmten Herkunft ins Studio weiterzuleiten.

Weitergeleitete Verbindungsversuche oder Anrufe werden in einem Pool 70 im Modul 7 oder im SMP 5 zwischengespeichert. Der Pool 70 besteht vorzugsweise aus einem sogenannte FIFO-Speicherbereich ("First-In First Out"). Die Anrufer, deren Anrufe weitergeleitet werden; bekommen den Wartesignalton zu hören oder, in einer bevorzugten Variante, einen im SCP 4 oder im Modul 7 vom Hauptpartner 12 gespeicherten Sprechtext, beispielsweise: "Sie haben jetzt eine Chance, dass Ihr Anruf ins Studio weitergeleitet wird, bitte bleiben Sie am Apparat". In diesem letzten Fall kann der Anruf verrechnet werden, auch wenn der Anrufer auflegt, bevor die Verbindung hergestellt wird. Diese Variante hat ausserdem den Vorteil, dass Anrufer länger am Apparat bleiben, wenn sie informiert werden.

Die Figur 2 zeigt ein Beispiel einer ersten Variante der Erfindung, in welcher Verbindungsversuche im Pool 70 an verschiedene Partner 12, 13, 14, usw. weitergeleitet werden, wobei vordefinierte Anteile von weiterzuleitenden Anrufen an jede benannte Zielnummer 12, 13, 14 weitergeleitet werden. Im dargestellten Beispiel werden 10 Prozent aller Anrufe aus dem Pool 70 an die erste Zielnummer des ersten Partners 12 weitergeleitet, 60 Prozent an den zweiten Partner 13 und 30 Prozent an den dritten Partner 14. Diese Anteile werden vorzugsweise vom Hauptpartner 12, der oft auch der Initiator der Abstimmungaktion ist, vor der Abstimmungsaktion über das Internet 11 im Modul 7 festgelegt und kann vorzugsweise auch während des Zeitfensters geändert werden, beispielsweise wenn einer der Partner 12, 13 oder 14 überfordert wird.

Die Chancen jedes Verbindungsversuchs im Pool 70 an die Zielnummer 12, 13 oder 14 weitergeleitet zu werden sind vorzugsweise gleich. Auf diese Weise kann sichergestellt werden, dass Anrufer aus Regionen im Netz in der Nähe des SCP 4 (deren ausgewählte Anrufe eine höhere Wahrscheinlichkeit haben, sich als erste im Pool 70 zu befinden) nicht bevorzugt werden und dass sie insbesondere keine höhere Chance haben, mit einem bevorzugten Partner 12, 13 oder 14 verbunden zu werden.

Im mit der Figur 1 dargestellten Beispiel ist der Hauptpartner 12 zugleich der Initiator der Abstimmungsaktion (in diesem Fall ein Fernsehstudio) an welchen 10% aller Verbindungsversuche im Pool 70 weitergeleitet werden müssen. Diese Verbindungsversuche werden von der Telefonzentrale des Studios 12 entgegengenommen; einige davon können für eine on-line Übertragung zum Studio weitergeleitet werden. In diesem Beispiel werden ferner 60 Prozent der Verbindungsversuche im Pool 70 an einen Call-Center 13 weitergeleitet, der auch von einem anderen Partner als dem Fernsehstudio betrieben werden kann. Die übrigen 10 Prozent werden maschinell von einem Sprachserver 14 (IVR, "Interactive Voice Response") eines dritten Partners 14 beantwortet.

Die Figur 3 zeigt ein Beispiel einer zweiten Variante der Erfindung, in welcher Verbindungsversuche im Pool 70 vorerst an den Hauptpartner 12 weitergeleitet werden. Dieser Partner hat in diesem Beispiel angegeben, dass er maximal zehn Anrufe gleichzeitig bearbeiten kann. Befinden sich im Pool weitere Verbindungsversuche, werden sie vorerst an den zweiten angegebenen Partner 13 weitergeleitet, bis die Kapazität dieses Partners (im dargestellten Beispiel hundert Anrufe gleichzeitig) ausgelastet ist. Die übrigen Anrufe (maximum hundert) werden an den nächsten Partner 14 weitergeleitet (Cascade Modus).

Die Anzahl Anrufe, die an jeden Partner weitergeleitet werden, wird vorzugsweise vom ersten Partner 12, der oft auch der Hauptpartner (Initiator der Abstimmungsaktion) ist, vor der Abstimmungsaktion über das Internet 11 im Modul 7 festgelegt und kann vorzugsweise auch während des Zeitfensters geändert werden, beispielsweise wenn einer der Partner 12, 13 oder 14 überfordert wird.

Diese zweite Variante hat den Vorteil, dass die ersten Anrufer immer mit dem Hauptpartner 12 verbunden werden, was manchmal als gerechter empfunden wird, wenn es sich als vorteilhafter erweist, mit dem Hauptpartner als mit anderen Partnern in Verbindung gesetzt zu werden.

In diesen beiden Varianten werden vorzugsweise die angerufenen Partner 12, 13, 14 beispielsweise durch unterschiedliche Ringmelodie oder durch unterschiedliche Anzeige auf einem Bildschirm im voraus über die Wahl des Anrufers informiert. Dies erlaubt eine schnellere Bearbeitung des Anrufs.

In einer dritten, nicht dargestellten Variante, werden die im Pool 70 registrierten Anrufe in Abhängigkeit von der abgegebenen Stimme weitergeleitet. In diesem Fall erhält beispielsweise ein erster Partner alle ausgewählten Anrufe von Teilnehmern, die ein erstes Votum abgelegt haben, ein zweiter Partner die Anrufe, die einem zweiten Votum entsprechen, usw. Diese Lösung kann auch mit den beiden oben erwähnten Lösungen kombiniert werden: in diesem Fall erhält beispielsweise der erste Partner 12 10 Prozent der Anrufe - unabhängig von der Wahl des Anrufers - während sich ein zweiter Partner 13 mit allen übrigen Anrufen im Pool 70 die einer ersten Wahl entsprechen und der nächste Partner 14 mit den übrigen Anrufen, die einer nächsten Wahl entsprechen, beschäftigen.

In einer vierten, nicht dargestellten Variante, werden Anrufe in Abhängigkeit von der Herkunft des Anrufers weitergeleitet. Auf diese Weise können beispielsweise Verbindungsversuche in Abhängigkeit vom Sprachgebiet des Anrufers an unterschiedliche Call Center weitergeleitet werden. Es ist vorzugsweise auch möglich, die Weiterleitung in Abhängigkeit von der Herkunft während einer Abstimmungsaktion zu konfigurieren, beispielsweise wenn das Fernsehstudio einen Anrufer aus einer bestimmten Region sucht. Diese vierte Variante kann auch mit den oben angegebenen Varianten 1 bis 3 kombiniert werden.

Selbstverständlich können die selektierten Partner ankommende Anrufe an verschiedene Adressen weiterleiten. Beispielsweise kann das Fernsehstudio 12 entscheiden, maximal einen Anruf gleichzeitig live zu übertragen, während andere Anrufe von einer Sprachmaschine beantwortet werden.

Wenn die verschiedenen Zielnummern, an die die Verbindungsversuche weitergeleitet werden von verschiedenen Partner betrieben werden (beispielsweise von verschiedenen Firmen) wird vorzugsweise im Modul 7 gezählt, wie viele Anrufe von jedem Partner tatsächlich entgegengenommen wurden und eventuell die totale Verbindungszeit. Diese Angaben können dem Hauptpartner ("Initiator") bekannt gemacht werden, der sie verwenden kann, um die anderen Partner zu bezahlen. Es ist auch möglich, dass jeder Partner vom Netzbetreiber eine andere Rechnung bzw. Gutschrift für die Durchführung der Abstimmungsaktion erhält, wobei der verrechnete bzw. gutgeschriebene Betrag von der Anzahl der entgegengenommenen Anrufe abhängig ist.

## Patentansprüche

1. Verfahren, mit welchem Anrufer in einem öffentlichen intelligenten Telekommunikationsnetz (2) ihre Stimme bei einer Abstimmungsaktion eines Hauptpartners während eines Zeitfensters durch Anwahl einer Telefonnummer abgeben können, wobei jede Nummer einem anderen Votum entspricht, wobei die anhand der angewählten Telefonnummer als Voten erkannten Verbindungsversuche während des benannten Zeitfensters gezählt werden, wobei ein Anteil der ankommenden Anrufe ausgewählt wird,
**dadurch gekennzeichnet, dass** die benannten ausgewählten Anrufe an verschiedene Zielnummern weitergeleitet werden.

2. Verfahren gemäss dem vorhergehenden Anspruch, **dadurch gekennzeichnet, dass** die benannten ausgewählten Anrufe gemäss vom benannten Hauptpartner über Internet vor oder während der Abstimmungsaktion definierten Kriterien weitergeleitet werden.

3. Verfahren gemäss dem vorhergehenden Anspruch, **dadurch gekennzeichnet, dass** die Zielnummern an die die benannten ausgewählten Anrufe weitergeleitet werden, vor oder während der Abstimmungsaktion vom benannten Hauptpartner (12) über Internet (11) eingegeben werden.

4. Verfahren gemäss einem der vorhergehenden Ansprüche, **dadurch gekennzeichnet, dass** vordefinierte Anteile von ausgewählten Anrufen an jede benannte Zielnummer weitergeleitet werden.

5. Verfahren gemäss dem vorhergehenden Anspruch, **dadurch gekennzeichnet, dass** die benannten Anteile vor oder während der Abstimmungsaktion vom benannten Hauptpartner (12) über Internet (11) eingegeben werden.

6. Verfahren gemäss einem der Ansprüche 1 bis 3, **dadurch gekennzeichnet, dass** die benannten ausgewählten Anrufe vorerst an eine erste benannte Zielnummer (12) weitergeleitet werden, und dass Anrufe erst dann an eine nächste Zielnummer (13; 14) weitergeleitet werden, wenn die Anzahl Anrufe die an die benannte erste Zielnummer weitergeleitet worden sind höher als ein vorbestimmter Schwellwert ist.

7. Verfahren gemäss dem vorhergehenden Anspruch, **dadurch gekennzeichnet, dass** der benannte Schwellwert vor oder während der Abstimmungsaktion vom benannten Hauptpartner (12) über Internet (11) eingegeben wird.

8. Verfahren gemäss einem der vorhergehenden Ansprüche, **dadurch gekennzeichnet, dass** mindestens eine benannte Zielnummer einer interaktiven Sprachstelle (IVR) entspricht.

9. Verfahren gemäss einem der vorhergehenden Ansprüche, **dadurch gekennzeichnet, dass** Teilnahmekriterien zur Teilnahme an der benannten Abstimmungsaktion vor oder während der Abstimmungsaktion vom benannten Hauptpartner (12) über Internet (11) eingegeben werden.

10. Verfahren gemäss dem vorhergehenden Anspruch, **dadurch gekennzeichnet, dass** die benannten Teilnahmekriterien Listen von Telefonnummern von autorisierten Teilnehmern umfassen.

11. Verfahren gemäss einem der vorhergehenden Ansprüche, **dadurch gekennzeichnet, dass** das Ergebnis der Abstimmungsaktion über Internet (11) bekannt gemacht wird.

12. Verfahren gemäss einem der vorhergehenden Ansprüche, **dadurch gekennzeichnet, dass** der benannte Hauptpartner (12) vor derAbstimmungsaktion über Internet (11) eingibt, ob die als Voten erkannten Verbindungsversuche in Vermittlungsstellen (3) des benannten Telekommunikationsnetzes (2) gezählt werden.

13. Verfahren gemäss dem vorhergehenden Anspruch, **dadurch gekennzeichnet, dass** der Anteil der benannten weitergeleiteten Verbindungsversuche in allen Vermittlungsstellen (3) derart ausgewählt wird, dass die Repräsentativität der Teilnehmer (1) aus verschiedenen Regionen gewährleistet wird.

14. Verfahren gemäss einem der vorhergehenden Ansprüche, **dadurch gekennzeichnet, dass** die Parameter über die Konditionen der Abstimmungsäktion, die vom benannten Hauptpartner eingegeben werden, in einem mit dem SCP verbundenen Modul (7) abgelegt sind.

15. Verfahren gemäss einem der vorhergehenden Ansprüche, **dadurch gekennzeichnet, dass** der gesprochene Text für ausgewählte Anrufe anders ist als für die in der Vermittlungsstelle terminierenden Anrufe.

16. Verfahren gemäss einem der vorhergehenden Ansprüche, **dadurch gekennzeichnet, dass** mindestens gewisse Anrufe online verrechnet werden.

17. Verfahren gemäss einem der vorhergehenden Ansprüche, **dadurch gekennzeichnet, dass** mindestens gewisse Anrufe offline verrechnet werden.

18. Verfahren gemäss einem der Ansprüche 16 oder 17, **dadurch gekennzeichnet, dass** der verrechnete Betrag abhängig von der abgegebenen Stimme ist.

19. Modul (7) zur Behandlung von Verbindungsversuchen während einer Abstimmungsaktion in einem intelligenten Netz, wobei das Modul derart ausgestaltet ist, daß es das Ergebnis der Abstimmungsaktion auswertet und dem Hauptpartner (12) bekannt gibt, wobei mindestens gewisse Bedingungen der Abstimmungsaktion durch Parameter im benannten Modul definiert sind, wobei ein Anteil der anhand der angewählten Telefonnummern als Voten erkannten Verbindungsversuche ausgewählt werden, **dadurch gekennzeichnet, dass** die benannten Parameter im benannten Modul (7) angeben, an welche Zielnummer die benannten ausgewählten Verbindungsversuche weitergeleitet werden sollen.

20. Modul gemäss dem vorhergehenden Anspruch, **dadurch gekennzeichnet, dass** es einen http-Server umfasst, und dass es an das Internet (11) angeschlossen ist.

21. Modul gemäss dem vorhergehenden Anspruch, **dadurch gekennzeichnet, dass** die Ergebnisse über Internet (11) veröffentlicht werden.

22. Modul gemäss einem der Ansprüche 19 bis 21, **dadurch gekennzeichnet, dass** die benannten Parameter vor und/oder während der benannten Abstimmungsaktion über Internet (11) vom benannten Hauptpartner geändert werden können.

23. Modul gemäss einem der Ansprüche 19 bis 22, **dadurch gekennzeichnet, dass** vordefinierte Anteile von den benannten ausgewählten Anrufen an jede benannte Zielnummer weitergeleitet werden.

24. Modul gemäss einem der Ansprüche 19 bis 22, **dadurch gekennzeichnet, dass** weiterzuleitende Anrufe vorerst an eine erste benannte Zielnummer weitergeleitet werden, und dass Anrufe erst dann an eine nächste Zielnummer weitergeleitet werden, wenn die Anzahl Anrufe die an die benannte erste Zielnummer weitergeleitet worden sind höher als ein vorbestimmter Schwellwert ist.

25. Modul gemäss einem der Ansprüche 19 bis 24, **dadurch gekennzeichnet, dass** die benannten Parameter Teilnahmekriterien umfassen, die angeben, welche Teilnehmer an der Abstimmungsaktion teilnehmen dürfen.

26. Modul gemäss einem der Ansprüche 19 bis 24, **dadurch gekennzeichnet, dass** die benannten Parameter Sprechtexte umfassen, die an den benannten Anrufer gesprochen werden.

## Claims

1. Method, with which callers in a public intelligent telecommunication network (2) can vote during a voting action of a main partner during a time window by selecting a telephone number, each number corresponding to another vote, the connection attempts recognised as votes on the basis of the selected telephone numbers during said time window being counted, part of the incoming calls being selected,
**characterised in that** said selected calls are forwarded to different target numbers.

2. Method according to the preceding claim, **characterised in that** said selected calls are forwarded according to criteria defined by said main partner over the Internet before or during the voting action.

3. Method according to the preceding claim, **characterised in that** the target numbers to which said selected calls are forwarded are entered by said main partner (12) over the Internet (11) before or during the voting action.

4. Method according to one of the preceding claims, **characterised in that** predefined quotas of selected calls are forwarded to each said target number.

5. Method according to the preceding claim, **characterised in that** said quotas are entered by said main partner (12) over the Internet (11) before or during the voting action.

6. Method according to one of the claims 1 to 3, **characterised in that** said selected calls are forwarded first to a first said target number (12) and **in that** calls are only then forwarded to a next target number (13; 14), when the number of calls forwarded to said first target number are higher than a predefined threshold value.

7. Method according to the preceding claim, **characterised in that** said threshold value is entered by said main partner (12) over the Internet (11) before or during the voting action.

8. Method according to one of the preceding claims, **characterised in that** at least one said target number corresponds to an interactive voice response (IVR).

9. Method according to one of the preceding claims, **characterised in that** participation criteria for participating to said voting action are entered by said main partner (12) over the Internet (11) before or during the voting action.

10. Method according to the preceding claim, **characterised in that** said participation criteria comprise lists of telephone numbers of authorised participants.

11. Method according to one of the preceding claims, **characterised in that** the result of the voting action is made known over the Internet (11).

12. Method according to one of the preceding claims, **characterised in that** said main partner (12), before the voting action, enters over the Internet (11) whether the connection attempts recognised as votes are counted in switching centres (3) of said telecommunication network (2).

13. Method according to the preceding claim, **characterised in that** in all switching centres (3) the quota of said forwarded connection attempts is chosen in such a manner that the representativeness of the participants (1) from different regions is ensured.

14. Method according to one of the preceding claims, **characterised in that** the parameters over the conditions of the voting action entered by said main partner are stored in a module (7) connected with the SCP.

15. Method according to one of the preceding claims, **characterised in that** the spoken text for selected calls is different than for the calls ending in the switching centres.

16. Method according to one of the preceding claims, **characterised in that** at least certain calls are billed online.

17. Method according to one of the preceding claims, **characterised in that** at least certain calls are billed offline.

18. Method according to one of the claims 16 or 17, **characterised in that** the billed amount is dependent on the vote.

19. Module (7) for handling connection attempts during a voting action in an intelligent network, the module being designed in such a manner that the result of the voting action is analysed and made known to the main partner (12), at least certain conditions of the voting action being defined through parameters in said module, a quota of the connection attempts recognised as votes on the basis of the selected telephone numbers being selected, **characterised in that** said parameters in said module (7) indicate to which target number said selected connection attempts are to be forwarded.

20. Module according to the preceding claim, **characterised in that** it comprises an http server and **in that** it is connected to the Internet (11).

21. Module according to the preceding claim, **characterised in that** the results are published over the Internet (11).

22. Module according to one of the claims 19 to 21, **characterised in that** said parameters can be modified by said main partner over the Internet (11) before and/or during said voting action.

23. Module according to one of the claims 19 to 22, **characterised in that** predefined quotas of said selected calls are forwarded to each said target number.

24. Module according to one of the claims 19 to 22, **characterised in that** the calls to be forwarded are first forwarded to a first said target number and **in that** calls are only then forwarded to a next target number when the number of calls forwarded to said first target number is higher than a predetermined threshold value.

25. Module according to one of the claims 19 to 24, **characterised in that** said parameters comprise participation criteria indicating which participants are allowed to participate to the voting action.

26. Module according to one of the claims 19 to 24, **characterised in that** said parameters comprise voice texts that are spoken to said caller.

## Revendications

1. Procédé avec lequel des appelants dans un réseau de télécommunication public intelligent (2) peuvent donner leur vote lors d'un scrutin d'un partenaire principal durant une fenêtre temporelle par la composition d'un numéro de téléphone, chaque numéro correspondant à un autre vote, les tentatives de connexion reconnues comme votes sur la base du numéro de téléphone composé durant ladite fenêtre temporelle étant comptées, une partie des appels entrants étant sélectionnés,
**caractérisé en ce que** lesdits appels sélectionnés sont retransmis à différents numéros cible.

2. Procédé selon la revendication précédente, **caractérisé en ce que** lesdits appels sélectionnés sont retransmis selon des critères définis par ledit partenaire principal à travers l'Internet avant ou pendant le scrutin.

3. Procédé selon la revendication précédente, **caractérisé en ce que** les numéros cible auxquels lesdits appels sélectionnés sont retransmis sont introduits par ledit partenaire principal (12) à travers l'Internet (11) avant ou pendant le scrutin.

4. Procédé selon l'une des revendications précédentes, **caractérisé en ce que** des quotas prédéfinis d'appels sélectionnés sont retransmis à chaque dit numéro cible.

5. Procédé selon la revendication précédente, **caractérisé en ce que** lesdites quotas sont introduits par ledit partenaire principal (12) à travers l'Internet (11) avant ou pendant le scrutin.

6. Procédé selon l'une des revendications 1 à 3, **caractérisé en ce que** lesdits appels sélectionnés sont retransmis auparavant à un premier dit numéro cible (12), et **en ce que** des appels sont retransmis à un prochain numéro cible (13; 14) uniquement lorsque le nombre d'appels ayant été retransmis audit premier numéro cible est supérieur à une valeur de seuil prédéterminée.

7. Procédé selon la revendication précédente, **caractérisé en ce que** ladite valeur de seuil est introduite avant ou pendant le scrutin par ledit partenaire principal (12) à travers l'Internet (11).

8. Procédé selon l'une des revendications précédentes, **caractérisé en ce qu'**au moins un dit numéro cible correspond à un répondeur vocal interactif (IVR).

9. Procédé selon l'une des revendications précédentes, **caractérisé en ce que** des critères de participation pour la participation audit scrutin sont introduits avant ou pendant ledit scrutin par ledit partenaire principal (12) à travers l'Internet (11).

10. Procédé selon la revendication précédente, **caractérisé en ce que** lesdits critères de participation comprennent des listes de numéros de téléphones de participants autorisés.

11. Procédé selon l'une des revendications précédentes, **caractérisé en ce que** le résultat du scrutin est dévoilé à travers l'Internet (11).

12. Procédé selon l'une des revendications précédentes, **caractérisé en ce que** ledit partenaire principal (12) introduit avant le scrutin à travers l'Internet (11) si les tentatives de connexion reconnues comme votes sont comptées dans des centrales téléphoniques (3) dudit réseau de télécommunication (2).

13. Procédé selon la revendication précédente, **caractérisé en ce que** dans toutes les centrales téléphoniques (3) le quota desdites tentatives de connexion retransmises est choisi de telle manière que la représentativité des participants (1) de différentes régions est assurée.

14. Procédé selon l'une des revendications précédentes, **caractérisé en ce que** les paramètres à propos des conditions du scrutin qui sont introduites par ledit partenaire principal sont déposées dans un module (7) relié au SCP.

15. Procédé selon l'une des revendications précédentes, **caractérisé en ce que** le texte parlé pour des appels sélectionnés est différent que pour les appels terminant dans la centrale téléphonique.

16. Procédé selon l'une des revendications précédentes, **caractérisé en ce qu'**au moins certains appels sont facturés en ligne.

17. Procédé selon l'une des revendications précédentes, **caractérisé en ce qu'**au moins certains appels sont facturés hors ligne.

18. Procédé selon l'une des revendications 16 ou 17, **caractérisé en ce que** le montant facturé est dépendant du vote.

19. Module (7) pour le traitement de tentatives de connexion durant un scrutin dans un réseau intelligent, le module étant équipé de sorte qu'il dépouille le résultat du scrutin et le communique au partenaire principal (12), au moins certaines conditions du scrutin étant définies par des paramètres dans ledit module, une part des tentatives de connexion reconnues comme votes sur la base des numéros de téléphone composés étant sélectionnées, **caractérisé en ce que** lesdits paramètres dans ledit module (7) indiquent à quel numéro cible lesdites tentatives de connexion sélectionnées doivent être retransmises.

20. Module selon la revendication précédente, **caractérisé en ce qu'**il comprend un serveur http et **en ce qu'**il est relié à l'Internet (11).

21. Module selon la revendication précédente, **caractérisé en ce que** les résultats sont publiés à travers l'internet.

22. Module selon l'une des revendications 19 à 21, **caractérisé en ce que** lesdits paramètres peuvent être modifiés à travers l'Internet (11) par ledit partenaire principal avant et/ou pendant ledit scrutin.

23. Module selon l'une des revendications 19 à 22, **caractérisé en ce que** des quotas prédéfinis desdits appels sélectionnés sont retransmis à chaque dit numéro cible.

24. Module selon l'une des revendications 19 à 22, **caractérisé en ce que** les appels à retransmettre sont retransmis auparavant à un premier numéro cible, et **en ce que** des appels sont retransmis à un prochain numéro cible uniquement lorsque le nombre d'appels ayant été retransmis audit premier numéro cible est supérieur à une valeur de seuil prédéterminée.

25. Module selon l'une des revendications 19 à 24, **caractérisé en ce que** lesdits paramètres comprennent des critères de participation qui indiquent quels participants sont autorisés à participer au scrutin.

26. Module selon l'une des revendications 19 à 24, **caractérisé en ce que** lesdits paramètres comprennent des textes parlés qui sont récités auxdits appelants.
